# EUROPEAN PATENT APPLICATION

(11) **EP 1 811 717 A1**
(43) Date of publication of application: **25.07.2007**
(21) Application number: 06126015.4
(22) Date of filing: 13.12.2006
(51) Int. Cl.: H04L 12/24, H04L 12/46

(54) **A method and system for transmitting control data traffic between a base station of a 3G mobile communication network and a network management station**

(30) Priority: 20.01.2006 FI 20060056
(71) Applicant: Tellabs Oy, 02630 Espoo (FI)
(72) Inventor: Kulmala, Marko, 02180, Espoo (FI); Lahtinen, Tero, 00530, Helsinki (FI); Porrega, Mario, 00052, Cerveteri RM (IT)
(74) Representative: Brax, Matti Juhani

(57) **Abstract**

The invention relates to a method and a system for transmitting packet switched control data traffic between a base station (NodeB) of a third generation (3G) mobile communication network and a network management station. In the system according to the invention, an IP-VPN virtual network is used to isolate essentially the control data traffic between a base station (301) of a third generation (3G) mobile communication network (301) and a network management station (305) from other data transfer transmitted in the data transfer network.

## Description

### Scope of invention

The invention relates to a method and a system for transmitting packet switched control data traffic between a base station (NodeB) of a third generation (3G) mobile communication network and a network management station.

### Background of invention

The ability of configuring the base stations (NodeB) is necessary in order that they would operate in various environments in a way required by the environment. The configuration of base stations includes, for example, the definition of the radio interface and logical data transfer channels. In addition, it must be possible to control the base stations.

The solution according to the prior art technique is to use the cellular ATM technology (Asynchronous Transfer Mode) to transmit data transfer packets representing the control data traffic between a network management station and a base station. The data transfer packets representing the control data traffic are split into ATM cells, which are transmitted through the ATM connections configured in the data transfer network. The ATM connections required for transmitting the control data traffic can be implemented either as normal ATM virtual circuits or, using the MPLS technology (MultiProtocol Label Switching), as so called ATM pseudowires, where an ATM pseudowire contains one or more ATM virtual circuits. Certain ATM connections are reserved solely for the control data traffic in order that it would be possible to isolate the control data traffic from the other data traffic transmitted in the data transfer network. It would be very harmful if hostile configuration operations could be performed at the base stations by an unauthorized party.

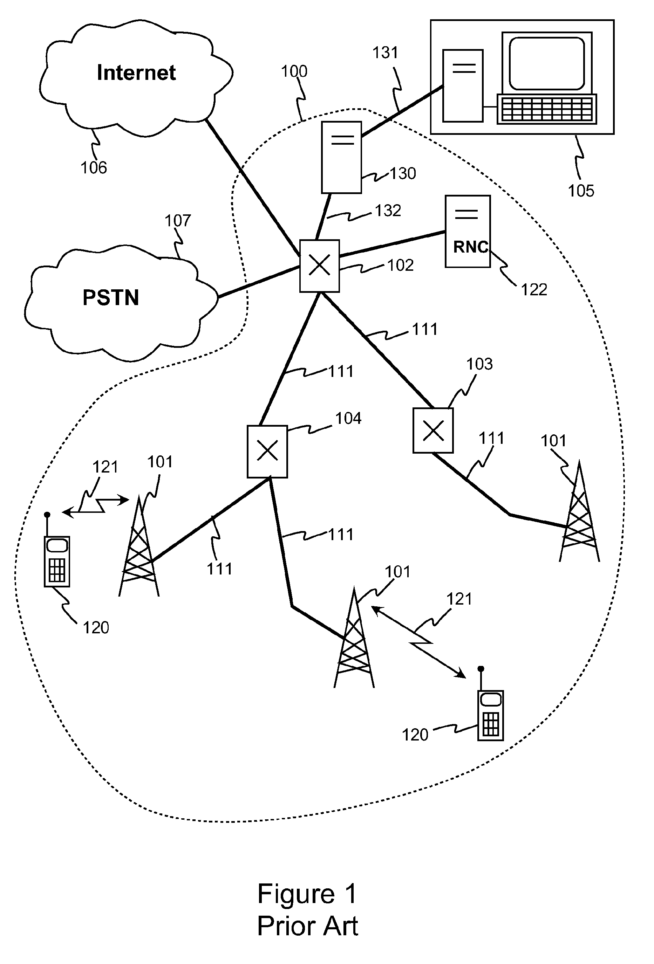

For illustrating the background of the invention, Figure 1 shows an exemplifying packet switched data transfer network 100, which comprises a system according to the prior art technique for transmitting packet switched control data traffic between the base stations (NodeB) 101 of a 3G mobile communication network and a network management station 105. The network elements 102, 103, and 104 are ATM switches. The ATM switches 102-104 and the base stations 101 are connected to each other with data transfer links 111. Each base station 101 is capable of creating a radio connection 121 to the mobile stations 120 residing within the coverage area of the base station examined. ATM virtual circuits have been configured in the ATM switches 102-104 for the control data traffic of the base stations 101. For the control data traffic of the base stations, there is provided a separate IP router 130, which is connected to the network management station 105 with an Ethernet connection 131 and which is connected to the ATM switch 102 with an ATM connection 132. The IP router 130 collects the data transfer packets representing the control data traffic from the ATM cells that have arrived from the ATM connection 132, and correspondingly, splits the data transfer packets representing the control data traffic, which have arrived from the Ethernet connection 131, into ATM cells. The ATM cells representing the control traffic are transmitted between the base stations and the IP router 130 along said ATM virtual circuits. The IP router 130 selects the correct ATM virtual circuit based on the IP destination address carried by the data transfer packet that represents the control data traffic. The network management station 105 and each base station 101 have an IP address of their own. The data transfer network 100 comprises a Radio Network Controller 122 (RNC), which controls the payload traffic between the base stations 101 and the mobile stations 120, such as voice and data communication. The mobile station 120 can be a mobile phone or a handheld, for example. In this exemplifying case, the data transfer network 100 is connected to the public Internet network 106 and to the Public Switched Telephone Network (PSTN) 107 via the ATM switch 102.

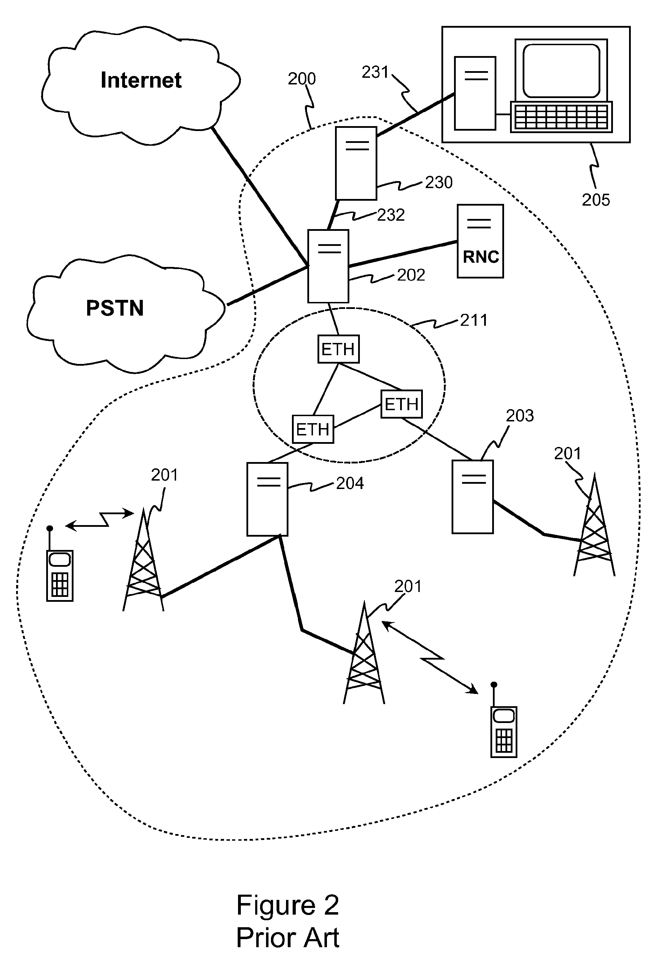

Figure 2 shows an exemplifying packet switched data transfer network 200, which comprises another system according to the prior art technique for transmitting packet switched control data traffic between the base stations (NodeB) 201 of a 3G mobile communication network and the network management station 205. The network elements 202, 203, and 204 are MPLS devices which are capable of implementing ATM pseudowires. ATM pseudowires can be used to implement ATM virtual circuits, which transfer ATM cell flows. These MPLS devices are connected to each other via an Ethernet network 211. For the control data traffic of the base stations, there is provided a separate IP router 230, which is connected to the network management station 205 via an Ethernet connection 231 and which is connected to the MPLS device 202 via an ATM connection 232. The IP router 230 collects the data transfer packets representing the control data traffic from the ATM cells that have arrived from the ATM connection 232, and correspondingly, splits the data transfer packets representing the control data traffic, which have arrived from the Ethernet connection 231, into ATM cells. The ATM cells representing the control traffic are transmitted between the base stations 201 and the IP router 230 along the ATM virtual circuits created by means of said ATM pseudowires. The IP router 230 selects the correct ATM virtual circuit based on the IP destination address carried by the data transfer packet that represents the control data traffic.

The problem in the above described systems according to the prior art technique is that the number of required ATM virtual circuits (ATM-VC) and correspondingly that of the ATM pseudowires increases strongly when the number of base stations is increased. Furthermore, in connection with the network management station, means are required, for example the router 130 in Figure 1 and the router 230 in Figure 2, for converting the data transfer packets representing the control data traffic to ATM cells and vice versa. Also, the use of the ATM technology for transmitting data transfer packets representing the control data traffic wastes the capacity of the data transfer network, since only a part of the bits contained in the ATM cells represents the payload, while the rest of the bits represent the title data of the ATM cells. Consequently, it would be advantageous if the control data traffic could be routed as original data transfer packets representing the control data traffic over as large a portion as possible of the distance between the base station and the network management station.

### Summary of invention

The invention relates to a system for transmitting packet switched control data traffic between a base station (Node B) of a third generation (3G) mobile communication network and a network management station in such a way that by means of the invention it is possible to remove or reduce limitations and disadvantages related to the prior art technique. The invention also relates to a method for transmitting packet switched control data traffic between a base station (Node B) of a third generation (3G) mobile communication network and a network management station in such a way that by means of the invention it is possible to remove or reduce limitations and disadvantages related to the prior art technique. The invention also relates to the use of an IP-VPN protocol (Internet Protocol - Virtual Private Network) for transmitting packet switched control data traffic between a base station (Node B) of a third generation (3G) mobile communication network and a network management station in such a way that by means of the invention it is possible to remove or reduce limitations and disadvantages related to the prior art technique.

The IP-VPN technology can be used to provide data transfer services, in which it is possible to create an impression of a customer-specific private network for the customers of these data transfer services in a situation in which the various customers, however, use the same physical data transfer network. In other words, a virtual private network is created for each customer. When utilizing the IP protocol, this is carried out by configuring in the routers virtual customer-specific routers which process customer-specific VPN routing and forwarding tables. In this way, an IP-VPN virtual network is created for each customer. The specification document RFC2547bis sets forth a method defined by the L3VPN work group of IETF (Internet Engineering Task Force) for providing IP-VPN services.

In this invention it has been unexpectedly discovered that said IP-VPN technology can be used for transmitting control data traffic between a base station (Node B) of a 3G mobile communication network and a network management station. Thus the transmission need of said control data traffic is processed in the same way as the need of a customer of a conventional VPN service provider for receiving a closed data transfer network from outsiders. Hence, the IP-VPN technology can be used to isolate the control data traffic from the other data traffic transmitted in the data transfer network and it can be routed as original data transfer packets representing the control data traffic over as large a portion as possible of the distance between the base station and the network management station.

The use of an IP-VPN protocol according to the invention is characterized in that an IP-VPN virtual network is used for isolating essentially the control data traffic between a base station (Node B) of a third generation (3G) mobile communication network and a network management station from the other data traffic transmitted in the data transfer network.

Remarkable advantages are achieved with the invention:
- Means for converting the data transfer packets representing the control data traffic to ATM cells and vice versa are no more required in connection with the network management station,
- The number of ATM virtual circuits (or ATM pseudowires) in the data transfer network reduces and/or the required lengths of the ATM virtual circuits (or ATM pseudowires) reduce, and
- The load caused by the control data traffic in the data transfer network reduces, as the control data traffic is routed as original data transfer packets representing the control data traffic over a larger portion of the distance between the base station and the network management station compared to the systems according to the prior art technique.

The system according to the invention for transmitting packet switched control data traffic between a base station (Node B) of a third generation (3G) mobile communication network and a network management station is characterized in that the system comprises:
- means for creating an IP-VPN virtual network in a data transfer network,
- means for forwarding said control data traffic within said IP-VPN virtual network, and
- means for preventing essentially access of other data traffic, transmitted in said data transfer network, than said control data traffic, to said IP-VPN virtual network.

The method according to the invention for transmitting packet switched control data traffic between a base station (Node B) of a third generation (3G) mobile communication network and a network management station is characterized in that in the method:
- an IP-VPN virtual network is created in a data transfer network,
- control data traffic between said base station and said network management station is transmitted in said IP-VPN virtual network, and
- access of other data traffic transmitted in said data transfer network than said control data traffic to said IP-VPN virtual network is essentially prevented.

The different embodiments of the invention are characterized in what is stated in the dependent claims.

### Short description of figures

The invention is described below in more detail by making reference to the proposed advantageous embodiments given as examples and to enclosed figures, in which
for illustrating the background of the invention, Figure 1 shows an exemplifying packet switched data transfer network, which comprises a system according to the prior art technique for transmitting packet switched control data traffic between a base station (NodeB) 101 of a 3G mobile communication network and a network management station,
Figure 2 shows one system according to the prior art technique for transmitting packet switched control data traffic between a base station (Node B) of a 3G mobile communication network and a network management station,
Figure 3 shows an exemplifying data transfer network, which comprises a system according to one embodiment of the invention for transmitting packet switched control data traffic between a base station (NodeB) of a 3G mobile communication network and a network management station,
Figure 4 shows an exemplifying data transfer network, which comprises a system according to one embodiment of the invention for transmitting packet switched control data traffic between a base station (NodeB) of a 3G mobile communication network and a network management station,
Figure 5 shows an exemplifying data transfer network, which comprises a system according to one embodiment of the invention for transmitting packet switched control data traffic between a base station (Node B) of a 3G mobile communication network and a network management station, and
Figure 6 is a flow chart showing a method according to one embodiment of the invention for transmitting packet switched control data traffic between a base station (Node B) of a 3G mobile communication network and a network management station.

### Detailed description of embodiments of invention

Figures 1 and 2 are described earlier in this document in connection with the description of the prior art technique.

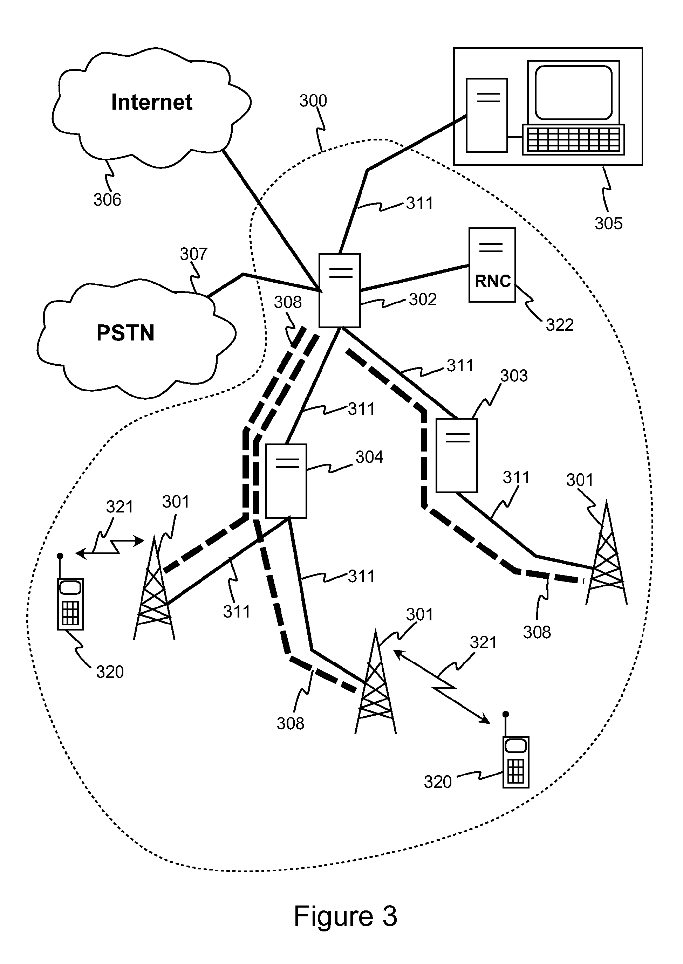

Figure 3 shows an exemplifying data transfer network 300, which comprises a system according to one embodiment of the invention for transmitting packet switched control data traffic between a base station (Node B) of a 3G mobile communication network and a network management station. The data transfer network is composed of network elements, which include, for example, routers, base stations and mobile stations, and of data transfer links, which connect the various network elements to each other. The data transfer network comprises at least one base station 301 of a 3G mobile communication network, which is capable of creating a radio connection 321 to the mobile stations 320 residing within the coverage area of the base station examined. The data transfer network comprises routers 302, 303 and 304. In this exemplifying case, the data transfer network 300 is connected to the public Internet network 306 and to the Public Switched Telephone Network (PSTN) 307 via the router 302. Said routers are connected to each other, to said base stations and to said network management station by means of data transfer links 311.

The network management station 305 is used to perform management and control tasks for the base stations 301. Said management comprises definition of logical data transfer channels arriving to and leaving from the base stations 301, setting of the transmission rating limits for the radio interface, and other configuration tasks concerning the base station. Said controlling comprises updating and maintenance of the base station's 301 malfunction log, updating and maintenance of the base station's loading data, and collection of other data related to the operation of the base station. Data traffic between the base station 301 and the network management station 305 required by said management and control operations constitutes the control data traffic between the base station and the network management station. The network management station 305 is connected to the data transfer network 300 via the router 302. The data transfer network comprises a Radio Network Controller 322 (RNC), which controls the payload traffic between the base stations and the mobile stations 320, such as voice and data communication. The mobile station 320 can be a mobile phone or a handheld, for example.

The means of the system according to this embodiment of the invention for creating an IP-VPN virtual network in the data transfer network comprise:
- equipment located in the routers 302, 303, and 304 and in the base stations 301 for creating packet switched data transfer tunnels 308 (PSN-tunnel, Packet Switched Network) between the router 302 and the base stations 301,
- equipment located in the router 302, which enable creating and maintaining the VPN routing and forwarding table residing in this router manually and/or by using an MP-BGP routing protocol (Multi Protocol Boarder Gateway Protocol), where said VPN routing and forwarding table is related to said IP-VPN virtual network, and
- equipment located in the router 302 and in the base stations 301 for terminating said packet switched data transfer tunnels 308.

Said packet switched data transfer tunnels 308 can be, for example, IP tunnels or MPLS label switched paths (Multi Protocol Label Switching), which can be created by using methods according to the prior art technique. In many practical conditions, along the route between the router 302 and the router 303 and/or along the route between the router 302 and the router 304, there are one or more routers or other packet switched devices, such as an Ethernet switch, in which case one or more of the packet switched data transfer tunnels 308 runs between said routers 302 and 303/304 via one or more routers or other packet switched devices.

The means of the system according to this embodiment of the invention for transmitting control data traffic between the base station 301 and the network management station 305 in said IP-VPN virtual network and the means for preventing essentially access of other data traffic transmitted in the data transfer network 300 to said IP-VPN virtual network comprise:
- equipment located in the router 302 for identifying the data transfer packets arriving from the network management station 305 as data transfer packets representing the control data traffic,
- equipment located in the router 302 for making the routing decision based on the IP destination address carried by the data transfer packets representing the control data traffic and on the VPN routing and forwarding table,
- equipment located in the router 302 for forwarding the data transfer packet representing the control data traffic to the packet switched data transfer tunnel 308 determined by the routing decision,
- equipment located in the base stations 301 for identifying the data transfer packets arriving from the packet switched data transfer tunnel 308 as data transfer packets representing the control data traffic,
- equipment located in the base stations 301 for forwarding the data transfer packets, created in the base station, representing the control data traffic to the packet switched data transfer tunnel 308 terminated in the base station, and
- equipment located in the router 302 for identifying the data transfer packets arriving from the packet switched data transfer tunnels 308 as data transfer packets representing the control data traffic and for routing them to the network management station 305.

The identification of data transfer packets in the router 302 as data transfer packets representing the control data traffic can be based, for example, on the information defining via which physical and/or logical input port the data transfer packets arrive to the router 302. Said identification can also be based on the identification of the source address, representing the IP, MAC (Media Access Control) or other protocol address associated with the network management station 305, carried by the data transfer packet representing the control data traffic 305. It is also possible to attach specific identification data to the data transfer packets representing the control data traffic, based on which they can be differentiated from the data transfer packets representing other data traffic. For detecting hostile control data traffic attacks, it is possible to use a method of compatibility resolution between the physical and/or logical input port and said source address, i.e. the RAL function (Reverse Address Lookup).

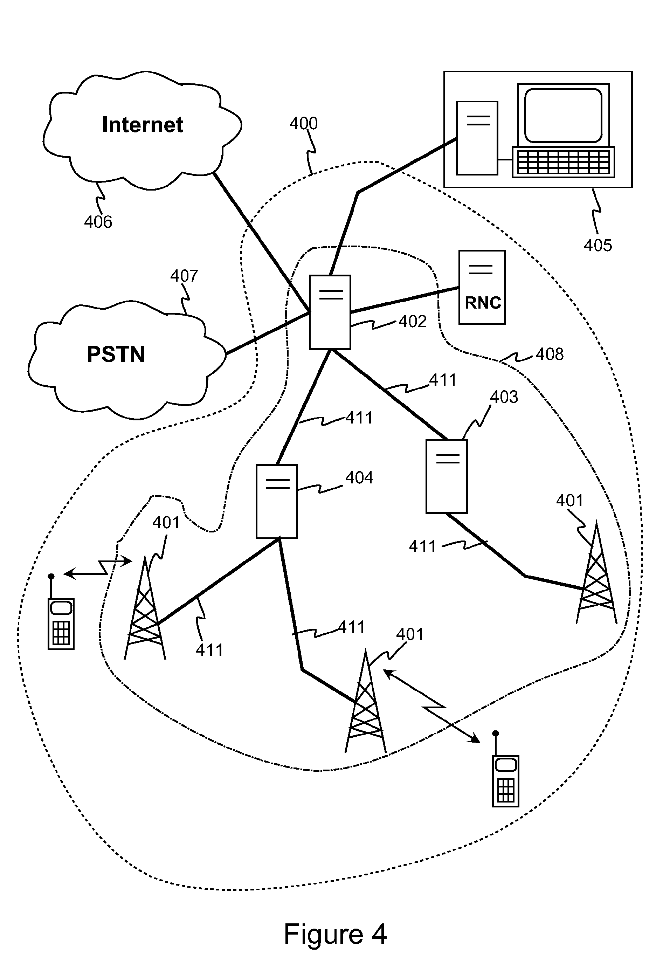

Figure 4 shows an exemplifying data transfer network 400, which comprises a system according to one embodiment of the invention for transmitting packet switched control data traffic between a base station (Node B) of a 3G mobile communication network and a network management station. The data transfer network comprises at least one base station 401 of a 3G mobile communication network. The data transfer network comprises routers 402, 403 and 404. The network management station 405 is connected to the data transfer network via the router 402. In this exemplifying case the data transfer network is connected to the public Internet network 406 and to the Public Switched Telephone Network (PSTN) 407 via the router 402.

The means of the system according to this embodiment of the invention for creating an IP-VPN virtual network in the data transfer network comprise:
- equipment located in the routers 402, 403, and 404 and in the base stations 401 for creating a VLAN virtual network 408 (Virtual Local Area Network) reserved for the control data traffic,
- equipment located in the router 402, which enable creating and maintaining the VPN routing and forwarding table residing in this router manually and/or by using an IGP routing protocol (Internal Gateway Protocol), according to the prior art technique, which operates within the VLAN virtual network 408, such as RIP (Routing Information Protocol), IGRP (Interior Gateway Routing Protocol), EIGRP (Enhanced Interior Gateway Routing Protocol), OSPF (Open Shortest Path First), or ISIS (Intermediate System to Intermediate System), where said VPN routing and forwarding table is associated with said IP-VPN virtual network, and
- equipment located in the router 402 and in the base stations 401 for terminating said virtual VLAN virtual network and associating it with the VPN routing and forwarding table.

The VLAN virtual network 408 is a logical data transfer network, which is implemented using the routers 402, 403, 404, the base stations 401, and the data transfer links 411. The same physical network elements and data transfer links can be used for creating more than one VLAN virtual network. One VLAN virtual network technique has been described in the specification document IEEE 802.1Q by IEEE.

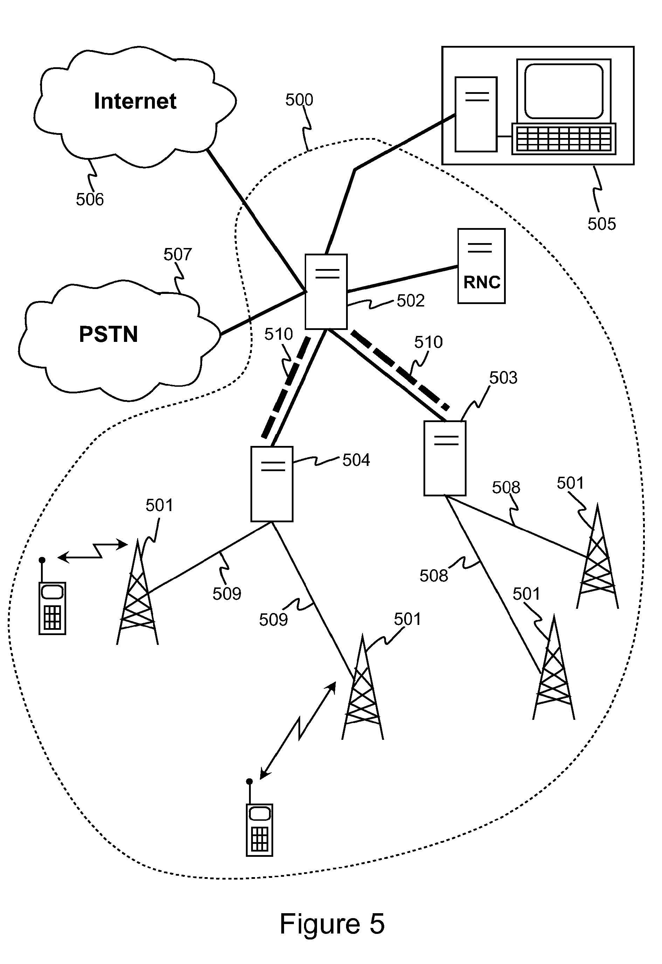

The means of the system according to this embodiment of the invention for transmitting control data traffic between the base station 401 and the network management station 405 within said IP-VPN virtual network and the means for preventing essentially access of other data traffic transmitted in the data transfer network 400 to said IP-VPN virtual network comprise:
- equipment located in the router 402 for identifying the data transfer packets arriving from the network management station 405 as data transfer packets representing the control data traffic,
- equipment located in the router 402 for making the routing decision based on the IP destination address carried by the data transfer packets representing the control data traffic and on the VPN routing and forwarding table,
- equipment located in the router 402 for forwarding the data transfer packet representing the control data traffic to the VLAN virtual network 408,
- equipment located in the base stations 401 for identifying the data transfer packets arriving from the VLAN virtual network 408 as data transfer packets representing the control data traffic,
- equipment located in the base stations 401 for forwarding the data transfer packets representing the control data traffic, created in the base station, to the VLAN virtual network 408, and
- equipment located in the router 402 for identifying the data transfer packets arriving from the VLAN virtual network 408 as data transfer packets representing the control data traffic and for routing them to the network management station 405. Figure 5 shows an exemplifying data transfer network 500, which comprises a system according to one embodiment of the invention for transmitting packet switched control data traffic between a base station (Node B) of a 3G mobile communication network and a network management station. The data transfer network comprises at least one base station 501 of a 3G mobile communication network. The data transfer network comprises routers 502, 503 and 504. The network management station 505 is connected to the data transfer network via the router 502. In this exemplifying case the data transfer network is connected to the public Internet network 506 and to the Public Switched Telephone Network (PSTN) 507 via the router 502. In this exemplifying case part of the base stations are connected to the router 503 with data transfer links 508 and part of the base stations are connected to the router 504 with data transfer links 509. Said data transfer links are provided with specific control transfer channels for the control data traffic, which can be, for example, ATM virtual circuits (Asynchronous Transfer Mode Virtual Circuit) or traditional time-slot switched E1 channels. The routers 503 and 504 are often called hub routers, as they distribute control data traffic to multiple base stations connected to them.

The means of the system according to this embodiment of the invention for creating an IP-VPN virtual network in the data transfer network comprise:
- equipment located in the routers 502, 503, and 504 for creating packet switched data transfer tunnels 510 (PSN-tunnel, Packet Switched Network) between the router 502 and the router 503 as well as between the router 502 and the router 504,
- equipment located in the routers 502, 503 and 504, which enable creating and managing the VPN routing and forwarding table residing in each router manually and/or by using an MP-BGP routing protocol (Multi Protocol Boarder Gateway Protocol), where each VPN routing and forwarding table is associated with said IP-VPN virtual network, and
- equipment located in the routers 502, 503, and 504 for terminating said packet switched data transfer tunnels 510.

In many practical conditions, along the route between the router 502 and the router 503 and/or along the route between the router 502 and the router 504, there are one or more routers or other packet switched network elements, such as an Ethernet switch, in which case one or more of the packet switched data transfer tunnels 510 runs via one or more routers or other packet switched network elements.

The means of the system according to this embodiment of the invention for transmitting control data traffic between the base station 501 and the network management station 505 within said IP-VPN virtual network and the means for preventing essentially access of other data traffic transmitted in the data transfer network 500 to said IP-VPN virtual network comprise:
- equipment located in the router 502 for identifying the data transfer packets arriving from the network management station 505 as data transfer packets representing the control data traffic,
- equipment located in the router 502 for making the routing decision based on the IP destination address carried by the data transfer packets representing the control data traffic and on the VPN routing and forwarding table,
- equipment located in the router 502 for forwarding the data transfer packet representing the control data traffic to the packet switched data transfer tunnel 510 determined by the routing decision,
- equipment located in the routers 503 and 504 for identifying the data transfer packets arriving from the packet switched data transfer tunnels 510 as data transfer packets representing the control data traffic, for making routing decisions based on the IP destination address carried by the data transfer packets representing the control data traffic and on the VPN routing and forwarding table, and for transmitting the data transfer packet representing the control data traffic to the destination base station using the control transfer channel determined by said routing decision,
- equipment located in the base stations 501 for forwarding the data transfer packets representing the control data traffic, created in the base station, to the router 503 or 504 using the control transfer channel,
- equipment located in the routers 503 and 504 for identifying the data transfer packets that arrive from the base stations 501 along control transfer channels as data transfer packets representing the control data traffic and for forwarding them to the packet switched data transfer tunnel 510, and
- equipment located in the router 502 for identifying the data transfer packets that arrive from the packet switched data transfer tunnels 510 as data transfer packets representing the control data traffic and for routing them to the network management station.

In the above described embodiments of the invention, the VPN routing and forwarding table associates the IP addresses of the base stations with the packet switched data transfer tunnels, with the VLAN virtual network, or with the control transfer channels between the router and the base station in such a way that an ability exists to direct a data transfer packet representing the control data traffic, addressed to a certain base station, to the packet switched data transfer tunnel leading to this base station, to the VLAN virtual network reserved for the control traffic, or to the control transfer channel between the router and the base station. The VPN routing and forwarding table associates the IP address with the packet switched data transfer tunnel or with the VLAN virtual network in such a way that an ability exists to direct a data transfer packet representing the control data traffic, addressed to the network management station, to an appropriate packet switched data transfer tunnel or VLAN virtual network. Thanks to the last mentioned feature, it is possible to implement systems which have more than one network management station.

The packet switched data transfer tunnels in the embodiment of the invention shown in Figure 5 can be replaced with a VLAN virtual network in a corresponding way as in the embodiment shown in Figure 4.

The equipment located in the routers and base stations in the above described embodiments of the invention can be implemented with programmable processors and applicable software and/or as an ASIC implementation (Application Specific Integrated Circuit) as well as with possible memory components required by the programmable processor and/or the ASIC component. Advantageously, said equipment is implemented at least partially using the same components as for the other router functions. In this document the term "equipment" is used with a wide meaning such that the equipment mentioned in the above description of the embodiments can consist, for example, of unities combined by the processor residing in the router and the computer software modules that are stored in the router and are readable by the processor, in which case one processor, for example, can be involved in several pieces of equipment.

In a system according to one embodiment of the invention, the VPN routing table(s) is/are manually entered to the router(s).

In a system according to one embodiment of the invention, only control data traffic between the base station and the network management station is allowed to access to the IP-VPN virtual network reserved for the control data traffic.

In a system according to one embodiment of the invention, in addition to the control data traffic between the base station and the network management station, data traffic that is allowed based on predefined conditions, such as emergency message traffic, is transmitted in the IP-VPN virtual network reserved for the control data traffic.

The data transfer networks 300, 400, and 500 shown in Figures 3, 4, and 5 are examples which are used in this document for illustrating the various embodiments of the invention. As is evident for those skilled in the art, several different network topologies and various numbers of routers and other network elements can exist in the practical data transfer networks. The system described in connection with each above presented embodiment of the invention for transmitting packet switched control data traffic between a base station (Node B) of a third generation (3G) mobile communication network and a network management station can be implemented in data transfer networks which comprise various network topologies.

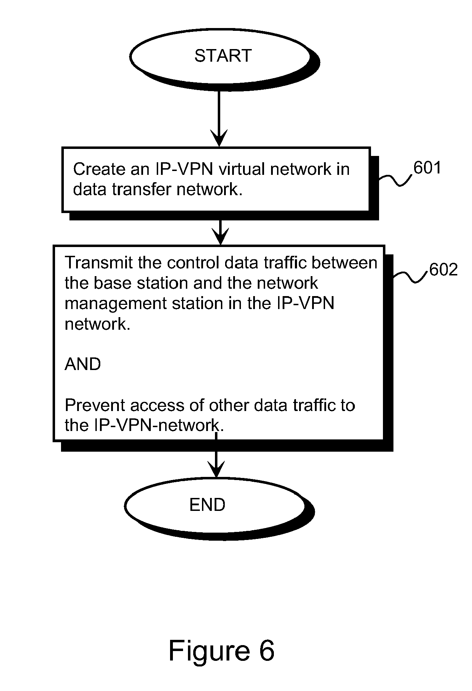

Figure 6 is a flow chart showing a method according to one embodiment of the invention for transmitting packet switched control data traffic between a base station (Node B) of a 3G mobile communication network and a network management station. In step 601, an IP-VPN virtual network is created in the data transfer network and in step 602, control data traffic between said base station and said network management station is transmitted in said IP-VPN virtual network and access of other data traffic transmitted in said data transfer network than said control data traffic to said IP-VPN virtual network is essentially prevented.

In the above described embodiments of the invention, an IP-VPN virtual network is used to isolate essentially the control data traffic between a base station (Node B) of a third generation (3G) mobile communication network and a network management station from the other data traffic transmitted in the data transfer network.

As is evident for those skilled in the art, the invention and its embodiments are not limited to the above described exemplifying embodiments, but the invention and its embodiments can be modified within the scope of the independent claims.

## Claims

1. A system for transmitting packet switched control data traffic between a base station (301) of a third generation (3G) mobile communication network and a network management station (305), **characterized in that** the system comprises:
- means for creating an IP-VPN virtual network (Internet Protocol Virtual Private Network) in the data transfer network,
- means for forwarding said control data traffic within said IP-VPN virtual network, and
- means for preventing access of essentially other data traffic transmitted in said data transfer network than said control data traffic to said IP-VPN virtual network.

2. A system according to claim 1, **characterized in that** the means for creating said IP-VPN virtual network are arranged to create said IP-VPN virtual network by using MPLS label switched paths (MultiProtocol Label Switching).

3. A system according to claim 1, **characterized in that** the means for creating said IP-VPN virtual network are arranged to create said IP-VPN virtual network by using IP tunnels.

4. A system according to claim 1, **characterized in that** the means for creating said IP-VPN virtual network are arranged to create said IP-VPN virtual network by using a VLAN virtual network (Virtual Local Area Network).

5. A system according to claim 2 or 3, **characterized in that** the means for creating said IP-VPN virtual network are arranged to create the VPN routing and forwarding tables of said IP-VPN virtual network by using an MP-BGP routing protocol (MuItiProtocol Boarder Gateway Protocol).

6. A system according to claim 4, **characterized in that** the means for creating said IP-VPN virtual network are arranged to create the VPN routing and forwarding tables of said IP-VPN virtual network by using an IGP routing protocol (Internal Gateway Protocol).

7. A system according to claim 1, **characterized in that** the means for creating said IP-VPN virtual network are arranged to enable a manual setup of the VPN routing and forwarding tables of said IP-VPN virtual network.

8. A method for transmitting packet switched control data traffic between a base station (NodeB) of a third generation (3G) mobile communication network and a network management station, **characterized in that** in the method:
- an IP-VPN virtual network is created (601) in the data transfer network,
- control data traffic between said base station and said network management station is transmitted (602) in said IP-VPN virtual network, and
- access of essentially other data traffic, transmitted in said data transfer network, than said control data traffic to said IP-VPN virtual network is prevented (602).

9. A method according to claim 8, **characterized in that** said IP-VPN virtual network is created by using MPLS label switched paths.

10. A method according to claim 8, **characterized in that** said IP-VPN virtual network is created by using IP tunnels.

11. A method according to claim 8, **characterized in that** said IP-VPN virtual network is created by using a VLAN virtual network (Virtual Local Area Network).

12. A method according to claim 9 or 10, **characterized in that** the VPN routing and forwarding tables of said IP-VPN virtual network are created by using an MP-BGP routing protocol.

13. A method according to claim 11, **characterized in that** the VPN routing and forwarding tables of said IP-VPN virtual network are created by using an IGP routing protocol.

14. A method according to claim 8, **characterized in that** the VPN routing and forwarding tables of said IP-VPN virtual network are entered manually to the routers of the data transfer network.

15. Use of an IP-VPN virtual network for isolating control data traffic between a base station (NodeB), residing in a data transfer network, of a third generation (3G) mobile communication network and a network management station connected to said data transfer network from essentially other data traffic transferred in said data transfer network.
